# EUROPÄISCHE PATENTSCHRIFT

(11) **EP 4 007 714 B1**
(45) Veröffentlichungstag und Bekanntmachung des Hinweises auf die Patenterteilung: **27.12.2023**
(21) Anmeldenummer: 20724810.5
(22) Anmeldetag: 07.05.2020
(51) Int. Cl.: B60T 8/171, B60T 8/1761

(54) **VERFAHREN ZUR SELBSTTÄTIGEN PARAMETRIERUNG EINES BREMSSYSTEMS**
METHOD FOR THE AUTOMATIC PARAMETERIZATION OF A BRAKE SYSTEM
PROCÉDÉ DE PARAMÉTRAGE AUTOMATIQUE D'UN SYSTÈME DE FREINAGE

(30) Priorität: 01.08.2019 DE 102019211551
(43) Veröffentlichungstag der Anmeldung: 08.06.2022
(73) Patentinhaber: Robert Bosch GmbH, 70442 Stuttgart (DE)
(72) Erfinder: SCHARBAK, Rami, 71726 Benningen (DE)
(86) Internationale Anmeldenummer: PCT/EP2020/062715
(87) Internationale Veröffentlichungsnummer: WO 2021/018430

(56) Entgegenhaltungen:
- US-A1- 2002 043 875
- US-A1- 2012 299 369
- US-B2- 9 207 135

## Beschreibung

Die Erfindung bezieht sich auf ein Verfahren zur selbsttätigen Parametrierung eines Bremssystems in einem Fahrzeug.

### Stand der Technik

Die Druckschrift US2012/299369 beschreibt eine Betriebsbremseinrichtung eines Fahrzeugs mit wenigstens einem von einem elektronischen Steuergerät zum schlupfgeregelten Bremsen gesteuerten ABS-Drucksteuerventil.

Bremssysteme in Fahrzeugen können in verschiedenen Betriebszuständen betrieben werden, unter anderem in einem Antiblockiermodus, bei dem es sich um eine Bremsdruckregelung handelt, um einem Blockieren der Räder entgegenzuwirken und den Bremsweg zu verkürzen. Bei der Anpassung des Bremssystems an einen bestimmten Fahrzeugtyp müssen im Wege der Applikation eine Vielzahl von Parameter eingestellt werden, um die verschiedenen Betriebsmodi wie den Antiblockiermodus in bestmöglicher Weise fahrzeugspezifisch anzupassen. Um die Bremsparameter zu bestimmen, ist es erforderlich, dass das Fahrzeug in vielen unterschiedlichen Fahrsituationen bewegt und abgebremst wird, wobei System- und Kenngrößen sensorisch ermittelt und ausgewertet werden. Diese Vorgehensweise ist zeitaufwändig und erfordert umfangreiches Wissen und Erfahrung des ausführenden Applikationsingenieurs.

### Offenbarung der Erfindung

Mit dem erfindungsgemäßen Verfahren ist es möglich, die Parametrierung eines Bremssystems in einem Fahrzeug selbsttätig durchzuführen. Hierbei wird während eines Testfahrbetriebs ein Bremsdruckverlauf als Testlauf vorgegeben und der sich daraufhin einstellende Radschlupf an mindestens einem Rad des Fahrzeugs ermittelt. Es ist sowohl möglich, den Radschlupf nur an einem Fahrzeugrad zu ermitteln als auch, den Radschlupf an mehreren Rädern oder gegebenenfalls an sämtlichen Rädern des Fahrzeugs zu ermitteln. Als Radschlupf wird in diesem Zusammenhang der Radlängsschlupf definiert.

Für den Fall, dass ein Radschlupfwert oder der Gradient des Radschlupfes außerhalb eines zulässigen Wertebereichs liegt, wird der Zeitpunkt im Bremsdruckverlauf bestimmt, zu dem der Bremsdruck oder der Gradient des Bremsdrucks ursächlich für den unzulässigen Radschlupfwert bzw. den unzulässigen Gradienten des Radschlupfes ist. Dieser Zeitpunkt liegt üblicherweise vor dem Zeitpunkt des unzulässigen Radschlupfwertes bzw. des unzulässigen Gradienten des Radschlupfes.

Es wird ein abgeänderter Bremsdruckverlauf als neuer Testlauf vorgegeben, wobei die Parameter des abgeänderten Bremsdruckverlaufs gespeichert und zur Parametrierung des Bremssystems verwendet werden, falls der sich im neuen Testlauf einstellende Radschlupfwert bzw. Gradient des Radschlupfes innerhalb eines zulässigen Wertebereiches liegt.

Sämtliche Verfahrensschritte werden selbsttätig durchgeführt. Ein manueller Eingriff durch den Applikationsingenieur ist bei dem erfindungsgemäßen Verfahren nicht erforderlich.

Diese Vorgehensweise hat den Vorteil, dass in kurzer Zeit eine Vielzahl von verschiedenen Parametern zur Einstellung des Bremssystems überprüft und im Hinblick auf die Anwendbarkeit optimiert werden können. Der Vorgang erfolgt selbsttätig und mit höherer Geschwindigkeit als bei manueller Durchführung. Insgesamt wird die Parametrierung des Bremssystems signifikant vereinfacht.

Das Verfahren zur selbsttätigen Parametrierung des Bremssystems bezieht sich vorzugsweise auf den Antiblockiermodus des Bremssystems, bei dem ein Blockieren der Räder verhindert und der Bremsweg möglichst verkürzt werden soll. Es kann gegebenenfalls zweckmäßig sein, das erfindungsgemäße Verfahren auch für die selbsttätige Parametrierung weiterer Bremsmodi einzusetzen, zum Beispiel für eine Antriebsschlupfregelung.

Das Verfahren ist gekennzeichnet durch Testläufe mit unterschiedlichen Bremsdruckverläufen, die selbsttätig modifiziert werden, indem ein Bremsparameter selbsttätig verändert wird. Der Parameter wird in dem ermittelten Zeitpunkt des Bremsdruckverlaufs festgelegt, zu dem der ursprüngliche Bremsdruck bzw. Gradient des Bremsdrucks die Ursache zu dem unzulässigen Radschlupfwert bzw. den unzulässigen Gradienten des Radschlupfes ist. "Ursache" ist dahingehend zu verstehen, dass sich aufgrund des Bremsdrucks bzw. Gradienten des Bremsdrucks mit zeitlichem Abstand ein unzulässiger Wert des Radschlupfes bzw. des Gradienten des Radschlupfes einstellt. Falls beispielsweise ein zu hoher Radschlupfwert festgestellt wird, der außerhalb des zulässigen Wertebereichs liegt, kann als Ursache ein zeitlich davorliegender, zu hoher Bremsdruckwert identifiziert werden. Als Abhilfemaßnahme wird daraufhin der Bremsdruckverlauf abgeändert, beispielsweise das Maximum des Bremsdrucks herabgesetzt, woraufhin ein entsprechender neuer Bremsdruckverlauf als Testlauf für die Ermittlung des Radschlupfes zugrunde gelegt wird. Falls in dem neuen Testlauf der Radschlupfwert bzw. der Gradient des Radschlupfes innerhalb des zulässigen Wertebereiches liegt, war die Änderung des Bremsdrucks ausreichend. Die diesem Bremsdruckverlauf zugrunde liegenden Parameter können für die Applikation des Bremssystems, bezogen auf ein bestimmtes Fahrzeug, abgespeichert und verwendet werden.

Der vorgegebene Bremsdruckverlauf kann einer bestimmten Raddrehzahländerung-Radschlupf-Kombination zugeordnet sein. Je nach Raddrehzahländerung in Abhängigkeit des Radschlupfes können verschiedene Bremsdruckverläufe vorgegeben werden, die jeweils als Testlauf dienen und mit dem vorbeschriebenen Verfahren modifiziert werden, bis ein Bremsdruckverlauf gefunden ist, bei dem sich zulässige Werte für den Radschlupf bzw. den Gradienten des Radschlupfes einstellen. Es können insgesamt eine Vielzahl verschiedener Bremsdruckverläufe vorgegeben werden, die jeweils einen Testlauf bilden, wobei jeder Bremsdruckverlauf einer bestimmten Kombination von Raddrehzahländerung und Radschlupf zugeordnet ist. Aufgrund der selbsttätigen Durchführung der Parametrierung ist es möglich, eine hohe Anzahl verschiedener Bremsdruckverläufe als Testläufe zu überprüfen. Für jeden gegebenen Bremsdruckverlauf können mehrere Anpassungen und dementsprechend mehrere Testläufe erforderlich werden, bis eine Parametrierung gefunden ist, die zu zulässigen Radschlupfwerten bzw. Gradienten des Radschlupfes führt.

Der Zeitpunkt im gespeicherten Bremsdruckverlauf, zu dem der Bremsdruck und der Gradient des Bremsdrucks ursächlich für den unzulässigen Radschlupfwert oder den Gradienten des Radschlupfes ist, kann gegebenenfalls unmittelbar aus dem Bremsdruckverlauf bestimmt werden. Bei dem bereits genannten Beispiel mit dem unzulässig hohen Radschlupfwert liegt der betreffende ursächliche Zeitpunkt im Bremsdruckverlauf beispielhaft beim Bremsdruckmaximum, was mit mathematischen Methoden bei einer Analyse des Bremsdruckverlaufs bestimmt werden kann.

Alternativ oder zusätzlich ist es auch möglich, den entsprechenden Zeitpunkt nicht aus dem Bremsdruckverlauf selbst, sondern aus einer anderen Systemgröße als den Bremsdruckverlauf zu bestimmen. In Betracht kommt beispielsweise der Ein-/Ausschaltverlauf des Bremsdrucks, der diskrete Werte von 0 (ausgeschaltet) und 1 (eingeschaltet) einnehmen kann. Im gespeicherten Bremsdruckverlauf kann beispielsweise der Übergang von eingeschaltet zu ausgeschaltet gesucht werden, da in diesem Übergang davon auszugehen ist, dass der Bremsdruckverlauf sein Maximum erreicht hat und wieder absinkt. Es ist somit möglich, aus dem Ein-/Ausschaltverlauf des Bremsdrucks auf bestimmte Zeitpunkte zu schließen, die für unzulässige Werte des Radschlupfes bzw. des Gradienten-Radschlupfes ursächlich sind.

Gemäß einer weiteren vorteilhaften Ausführung wird bei einer Änderung des Bremsdruckverlaufs als Parameter der Bremsdruck und/oder der Gradient des Bremsdrucks verändert. Es kommt sowohl eine Erhöhung als auch eine Absenkung des Bremsdrucks bzw. des Gradienten des Bremsdrucks in Betracht. Die Änderung erfolgt selbsttätig, beispielsweise indem um einen prozentual festgelegten Wert geändert wird. Mit dem geänderten Wert wird der sich daraus einstellende Bremsdruckverlauf als neuer Testlauf zugrunde gelegt und erneut der Radschlupfwert bzw. der Gradient des Radschlupfes bestimmt und im Hinblick auf Überschreitung des zulässigen Wertebereichs überprüft.

Der vorgegebene Bremsdruckverlauf kann gegebenenfalls von weiteren Kenn- oder Systemgrößen abhängen. In Betracht kommt beispielsweise eine Radschlupfänderung, also die zeitliche Ableitung des Radschlupfes, oder ein Raddrehzahlruck.

Das Verfahren kann im realen Fahrbetrieb auf einer Straße durchgeführt werden. Hierbei werden verschiedene Bremsmanöver mit jeweils einem Bremsdruckverlauf als Testverlauf gefahren und der sich hierbei einstellende Radschlupfwert und/oder der Gradient des Radschlupfes bestimmt. Des Weiteren ist es auch möglich, den Reibwert zwischen Rad- und Fahrbahn zu berücksichtigen.

In einer alternativen Ausführung ist es auch möglich, dass das Fahren auf einem Rollenprüfstand durchgeführt wird. Auch auf dem Rollenprüfstand können verschiedene Fahrsituationen mit unterschiedlichen Bremsdruckverläufen selbsttätig überprüft werden, um die gewünschte selbsttätige Parametrierung des Bremssystems durchzuführen.

Die Erfindung bezieht sich des Weiteren auf ein Steuergerät zur Ansteuerung der einstellbaren Komponenten des Bremssystems. Mithilfe des Steuergeräts wird das vorbeschriebene Verfahren durchgeführt. Dem Steuergerät können außerdem Sensorsignale von einer oder mehreren Sensoriken im Fahrzeug zugeführt werden, insbesondere im Hinblick auf die Ermittlung der Raddrehzahl und der zeitlichen Ableitung der Raddrehzahl sowie des Radschlupfes und der zeitlichen Ableitung des Radschlupfes. Im Steuergerät sind vorteilhafterweise verschiedene Bremsdruckverläufe abgespeichert, die jeweils einer bestimmten Raddrehzahländerung-Radschlupf-Kombination zugeordnet sind und als Testlauf vorgegeben werden. In dem Steuergerät können außerdem die ermittelten Parameter abgespeichert werden, die den modifizierten, zulässigen Bremsdruckverläufen zugeordnet sind.

Die Erfindung bezieht sich des Weiteren auf ein Bremssystem in einem Fahrzeug, das mit einem vorbeschriebenen Steuergerät ausgestattet ist. Bei dem Bremssystem handelt es sich insbesondere um ein hydraulisches Bremssystem.

Die Erfindung bezieht sich des Weiteren auf ein Fahrzeug mit einem vorbeschriebenen Bremssystem.

Die Erfindung bezieht sich schließlich auf ein Computerprogrammprodukt mit einem Programmcode, der dazu ausgelegt ist, die vorbeschriebenen Verfahrensschritte auszuführen. Das Computerprogrammprodukt läuft in dem vorbeschriebenen Steuergerät ab.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung eines hydraulischen Bremssystems,
- Fig. 2: ein Zuordnungsschema für verschiedene Bremsdruckverläufe in Abhängigkeit der Raddrehzahländerung des Radschlupfes,
- Fig. 3: ein Schaubild mit dem Ein-/Ausschaltverlauf des Bremsdrucks, mit dem Radschlupfverlauf, mit dem Verlauf gemäß Zuordnungsschema nach Fig. 1 und mit dem Bremsdruckverlauf, wobei Fig. 3 den Fall eines zu hohen Radschlupfes zeigt,
- Fig. 4: eine Fig. 3 entsprechende Darstellung, dargestellt für einen zu geringen Bremsdruck,
- Fig. 5: eine weitere Darstellung gemäß den Fig. 3 und 4 (ohne Ein-/Ausschaltverlauf des Bremsdrucks), dargestellt für einen zu steilen Anstieg des Radschlupfes.

In den Figuren sind gleiche Gegenstände mit gleichen Bezugszeichen versehen.

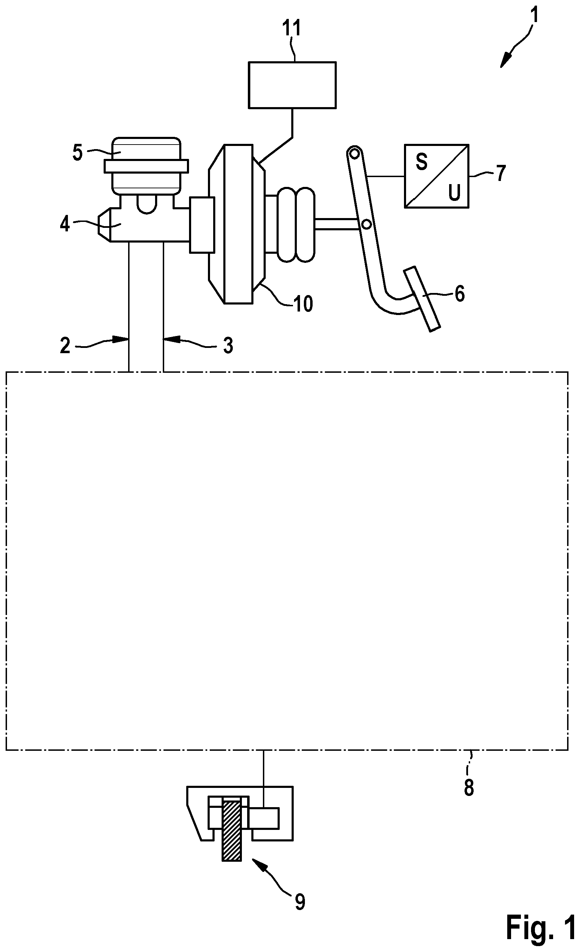

Das in Fig. 1 dargestellte hydraulische Bremssystem 1 ist als eine Fahrzeugbremse für ein Fahrzeug ausgeführt und umfasst einen Vorderachs-Bremskreis 2 und einen Hinterachs-Bremskreis 3 zur Versorgung und Ansteuerung von Radbremseinrichtungen 9 an jedem Rad des Fahrzeugs mit einem unter Hydraulikdruck stehenden Bremsfluid. Die beiden Bremskreise 2, 3 sind an einen gemeinsamen Hauptbremszylinder 4 angeschlossen, der über einen Bremsflüssigkeitsvorratsbehälter 5 mit Bremsfluid versorgt wird. Der Hauptbremszylinderkolben innerhalb des Hauptbremszylinders 4 wird vom Fahrer über das Bremspedal 6 betätigt, der vom Fahrer ausgeübte Pedalweg wird über einen Pedalwegsensor 7 gemessen. Zwischen dem Bremspedal 6 und dem Hauptbremszylinder 4 befindet sich ein Bremskraftverstärker 10, der beispielsweise einen Elektromotor umfasst, welcher bevorzugt über ein Getriebe den Hauptbremszylinder 4 betätigt (iBooster).

Die vom Pedalwegsensor 7 gemessene Stellbewegung des Bremspedals 6 wird als Sensorsignal an ein Steuergerät 11 übermittelt, in welchem Stellsignale zur Ansteuerung des Bremskraftverstärkers 10 erzeugt werden. Die Versorgung der Radbremseinrichtungen 9 mit Bremsfluid erfolgt in jedem Bremskreis 2, 3 über verschiedene Schaltventile, die gemeinsam mit weiteren Aggregaten Teil einer Bremshydraulik 8 sind.

Das Bremssystem muss zur Fertigstellung an das jeweilige Fahrzeug angepasst werden. Zu diesem Zweck muss das Bremssystem parametriert werden, also verschiedene Parameter des Bremssystems fahrzeugspezifisch festgelegt werden. Um den Aufwand für die Parametrierung so gering wie möglich zu halten und die Parametrierung schnellstmöglich durchzuführen, wird ein automatisiertes Verfahren angewandt, bei dem während eines Testfahrbetriebs verschiedene Bremsdruckverläufe als Testlauf vorgegeben werden und der sich daraufhin einstellende Radschlupf an einem oder mehreren Rädern des Fahrzeugs ermittelt und mit einem zulässigen Wertebereich verglichen wird. Liegt der Radschlupf außerhalb des zulässigen Wertebereichs, wird der Zeitpunkt im Bremsdruckverlauf bestimmt, zu dem der Bremsdruck oder der Gradient des Bremsdrucks ursächlich für den unzulässigen Radschlupfwert ist. Der Bremsdruckverlauf wird abgeändert, wobei der abgeänderte Bremsdruckverlauf als neuer Testlauf vorgegeben wird. Die Änderung des Bremsdruckverlaufs erfolgt durch Modifikation mindestens eines Parameters, wobei die Parameter des abgeänderten Bremsdruckverlaufs gespeichert und dauerhaft zur Parametrierung des Bremssystems verwendet werden, falls der Radschlupfwert, welcher sich bei dem abgeänderten Bremsdruckverlauf einstellt, innerhalb des zulässigen Wertebereiches liegt. Zusätzlich oder alternativ zum Radschlupfwert kann auch der Gradient des Radschlupfes betrachtet werden.

Sämtliche Verfahrensschritte laufen selbsttätig in einem Steuergerät des Bremssystems ab, also die Auswahl eines Bremsdruckverlaufs, das Durchführen eines Testlaufs und die Ermittlung des sich einstellenden Radschlupfes bzw. des Gradienten des Radschlupfes, die Bestimmung des Zeitpunktes im Bremsdruckverlauf, zu dem der Bremsdruck oder der Gradient des Bremsdrucks ursächlich für den unzulässigen Radschlupfwert oder den unzulässigen Gradienten des Radschlupfes ist, die Abänderung des Bremsdruckverlaufs durch Modifizierung mindestens eines Parameters des Bremssystems, das Durchführen eines neuen Testlaufs auf der Basis des abgeänderten Bremsdruckverlaufs, die Bestimmung des sich daraufhin einstellenden Radschlupfwertes bzw. des Gradienten des Radschlupfes, und die Abspeicherung der Parameter des abgeänderten Bremsdruckverlaufs für den Fall, dass der Radschlupfwert bzw. der Gradient des Radschlupfes innerhalb eines zulässigen Wertebereichs liegt.

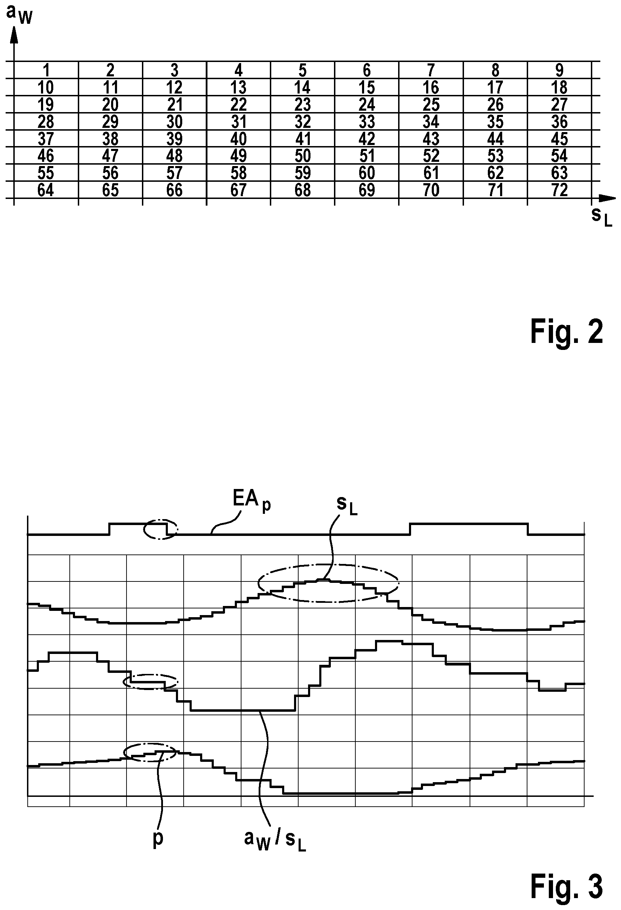

In Fig. 2 ist ein Zuordnungsschema für eine Vielzahl von Wertepaaren von Raddrehzahländerungen a_{w} (Y-Achse) und Radschlupf s_{L} (X-Achse) dargestellt. Im Ausführungsbeispiel werden insgesamt 72 verschiedene Kombinationen definiert, wobei jede Wertekombination von Raddrehzahländerung bzw. Radbeschleunigung a_{w} und Radschlupf s_{L} zusätzlich mit weiteren System- oder Kenngrößen einhergeht, die der jeweiligen Kombination zugeordnet sind. Es handelt sich bei den weiteren System- oder Kenngrößen beispielsweise um die Ableitung des Radschlupfes.

In Fig. 3 ist der zeitabhängige Verlauf verschiedener Kenn- und Systemgrößen des Bremssystems bei Vorgabe eines Bremsdruckverlaufs p dargestellt. Das Einschalt und Ausschalten des Bremsdrucks ist mit dem Ein-/Ausschaltverlauf EAₚ dargestellt. Als Folge des Bremsdruckverlaufs p stellt sich ein Radschlupf s_{L} ein, dem der Verlauf des Zuordnungsschemas a_{w}/s_{L} gemäß Fig. 2 zugeordnet ist. In dem eingekreisten Bereich nimmt der Radschlupf s_{L} ein Maximum ein, das oberhalb eines zulässigen Wertebereichs liegt. Dementsprechend wird der Radschlupf s_{L} an dieser Stelle zu groß.

Die Ursache für den zu hohen Radschlupf liegt in dem zu hohen Bremsdruck p, der zu einem früheren Zeitpunkt erreicht wird, wie den ebenfalls eingekreisten Positionen im Verlauf des Ein-/Ausschaltverlaufs EAₚ des Bremsdrucks p sowie des Zuordnungsschemas a_{w}/s_{L} zu entnehmen ist. Der Bremsdruck p erreicht ein zu hohes Maximum. Um dieses Maximum zu reduzieren und damit einhergehend auch den maximalen Radschlupf s_{L} auf einen niedrigeren Wert zu begrenzen, kann beispielsweise der Ausschaltzeitpunkt des Bremsdrucks gemäß dem Verlauf EAₚ vorgezogen werden, so dass der Bremsdruck nur über eine kürzere Zeitspanne aufgebaut wird. Daraufhin stellt sich ein niedrigerer Bremsdruck p und in der Folge auch ein geringerer Radschlupf s_{L} ein.

Die Verkürzung des Bremsdruckaufbaus stellt einen Parameter dar, der gemäß dem Verfahren selbsttätig modifiziert werden kann. Im Anschluss kann ein geänderter Bremsdruckverlauf als neuer Testlauf vorgegeben werden, auf dessen Basis der Radschlupf s_{L} ermittelt wird. Liegt der maximale Radschlupf s_{L} nun in einer zulässigen Größenordnung, können die entsprechenden Parameter dauerhaft abgespeichert werden. Die Abspeicherung erfolgt unter dem Wertepaar a_{w}/s_{L}, das eingekreist ist.

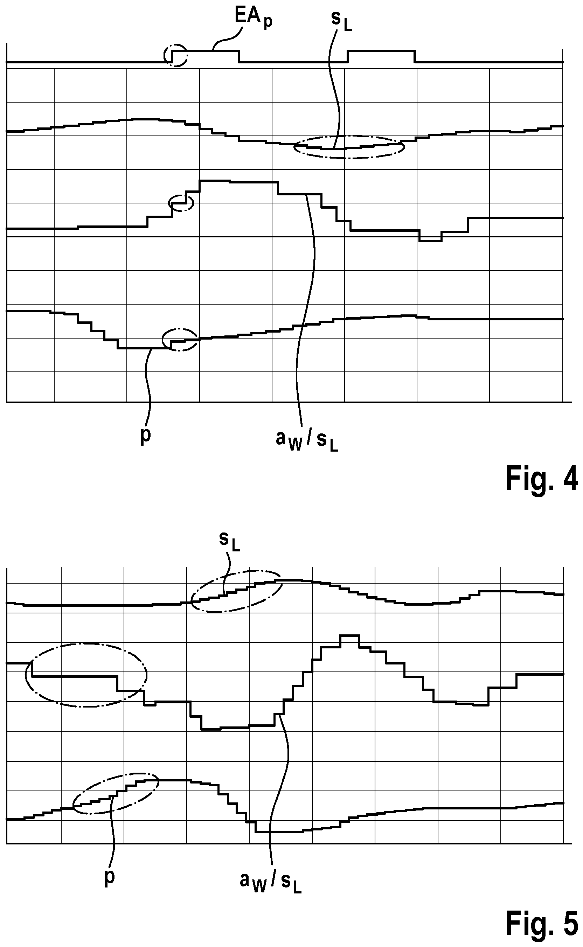

In Fig. 4 ist ein weiteres Ausführungsbeispiel dargestellt, bei dem der Längsschlupf s_{L} des Fahrzeugrades im eingekreisten Bereich ein Minimum einnimmt, das auf einen zeitlich davorliegenden, zu geringen Bremsdruck p im ebenfalls eingekreisten Bereich zurückzuführen ist. Bei dem Verfahren kann selbsttätig der Bremsdruck p im Bremsdruckverlauf angehoben werden, beispielsweise durch ein früheres Einschalten im Ein-/Ausschaltverlauf EAₚ des Bremsdrucks, woraufhin sich ein höherer Radschlupf s_{L} einstellt. Liegt dieser höhere Radschlupf s_{L} nun in einem zulässigen Wertebereich, kann die Parametrierung im Zuordnungsschema a_{w}/s_{L} im entsprechenden Feld dauerhaft abgespeichert werden.

Im weiteren Ausführungsbeispiel gemäß Fig. 5 ist der Gradient des Radschlupfes s_{L} im eingekreisten Bereich zu hoch und liegt somit außerhalb des zulässigen Wertebereichs. Dies ist auf einen entsprechenden Druckanstieg im Bremsdruckverlauf p im eingekreisten Bereich zurückzuführen, dem das eingekreiste Wertepaar im Zuordnungsschema a_{w}/s_{L} entspricht. Durch eine entsprechende Reduzierung des Druckanstiegs kann auch eine Reduzierung des Radschlupf-Gradienten erreicht und eine Absenkung des Radschlupf-Gradienten in den zulässigen Wertebereich erzielt werden. Die entsprechende Parametrierung kann in dem Wertepaar des Zuordnungsschemas a_{w}/s_{L} dauerhaft abgespeichert werden.

## Patentansprüche

1. Verfahren zur selbsttätigen Parametrierung eines Bremssystems in einem Fahrzeug, bei dem während eines Testfahrbetriebs ein Bremsdruckverlauf (p) als Testlauf vorgegeben und der sich daraufhin einstellende Radschlupf (s_{L}) an mindestens einem Rad des Fahrzeugs ermittelt wird, **dadurch gekennzeichnet, dass** für den Fall, dass ein Radschlupfwert (s_{L}) oder der Gradient des Radschlupfes (s_{L}) außerhalb eines zulässigen Wertebereichs liegt, der Zeitpunkt im Bremsdruckverlauf (p) bestimmt wird, zu dem der Bremsdruck (p) oder der Gradient des Bremsdrucks (p) ursächlich für den unzulässigen Radschlupfwert (s_{L}) oder den unzulässigen Gradienten des Radschlupfes (s_{L}) ist, und ein abgeänderter Bremsdruckverlauf (p) als neuer Testlauf vorgegeben wird, wobei die Parameter im ermittelten Zeitpunkt des abgeänderten Bremsdruckverlaufs (p) gespeichert und zur Parametrierung des Bremssystems verwendet werden, falls der Radschlupfwert (s_{L}) oder der Gradient des Radschlupfes (s_{L}) des sich daraufhin einstellenden Radschlupfverlaufs innerhalb des zulässigen Wertebereichs liegt.

2. Verfahren nach Anspruch 1, **dadurch gekennzeichnet, dass** der Zeitpunkt im gespeicherten Bremsdruckverlauf (p), zu dem der Bremsdruck (p) oder der Gradient des Bremsdrucks (p) ursächlich für den unzulässigen Radschlupfwert (s_{L}) oder den Gradienten des Radschlupfes (s_{L}) ist, direkt aus dem Bremsdruckverlauf (p) bestimmt wird.

3. Verfahren nach Anspruch 1 oder 2, **dadurch gekennzeichnet, dass** der Zeitpunkt im gespeicherten Bremsdruckverlauf (p), zu dem der Bremsdruck (p) oder der Gradient des Bremsdrucks (p) ursächlich für den unzulässigen Radschlupfwert oder den Gradienten des Radschlupfes (s_{L}) ist, aus einer anderen Systemgröße als dem Bremsdruckverlauf (p) bestimmt wird, zum Beispiel aus dem Ein-/Ausschaltverlauf (EAₚ) des Bremsdrucks (p).

4. Verfahren nach einem der Ansprüche 1 bis 3, **dadurch gekennzeichnet, dass** bei der Änderung des Bremsdruckverlaufs (p) als Parameter der Bremsdruck (p) und/oder der Gradient des Bremsdrucks (p) erhöht oder abgesenkt wird.

5. Verfahren nach einem der Ansprüche 1 bis 4, **dadurch gekennzeichnet, dass** bei der Änderung des Bremsdruckverlaufs (p) mindestens ein den Bremsdruckverlauf (p) kennzeichnender Parameter um einen festgelegten Betrag geändert wird.

6. Verfahren nach einem der Ansprüche 1 bis 5, **dadurch gekennzeichnet, dass** der vorgegebene Bremsdruckverlauf (p) einer bestimmten Raddrehzahländerung-Radschlupf-Kombination zugeordnet ist.

7. Verfahren nach Anspruch 6, **dadurch gekennzeichnet, dass** der vorgegebene Bremsdruckverlauf (p) von weiteren Kenn- oder Systemgrößen abhängt, beispielsweise von der Radschlupfänderung oder einem Raddrehzahlruck.

8. Verfahren nach einem der Ansprüche 1 bis 7, **gekennzeichnet durch** eine Durchführung im realen Fahrbetrieb auf einer Straße.

9. Verfahren nach einem der Ansprüche 1 bis 7, **gekennzeichnet durch** eine Durchführung auf einem Rollenprüfstand.

10. Steuergerät zur Ansteuerung der einstellbaren Komponenten eines Bremssystems zur Durchführung des Verfahrens nach einem der Ansprüche 1 bis 9.

11. Bremssystem in einem Fahrzeug, mit einem Steuergerät (11) nach Anspruch 10.

12. Fahrzeug mit einem Bremssystem nach Anspruch 11.

13. Computerprogrammprodukt mit einem Programmcode, der dazu ausgelegt ist, Schritte des Verfahrens nach einem der Ansprüche 1 bis 9 auszuführen, wenn das Computerprogrammprodukt in einem Steuergerät (11) gemäß Anspruch 10 abläuft.

## Claims

1. Method for the automatic parameterization of a brake system in a vehicle, in the case of which method, during test driving operation, a brake pressure profile (p) being predefined as test run, and the wheel slip (s_{L}) which is thereupon set is determined at at least one wheel of the vehicle, **characterized in that**, for the case where a wheel slip value (s_{L}) or the gradient of the wheel slip (s_{L}) lies outside a permissible value range, the time in the brake pressure profile (p) is determined, at which time the brake pressure (p) or the gradient of the brake pressure (p) is the cause of the impermissible wheel slip value (s_{L}) or the impermissible gradient of the wheel slip (s_{L}), an unmodified brake pressure (p) is predefined as new test run, the parameters being stored at the determined time of the modified brake pressure profile (p) and being used for the parameterization of the brake system if the wheel slip value (s_{L}) or the gradient of the wheel slip (s_{L}) of the wheel slip profile which is thereupon set lies within the permissible value range.

2. Method according to Claim 1, **characterized in that** the time in the stored brake pressure profile (p), at which time the brake pressure (p) or the gradient of the brake pressure (p) is the cause of the impermissible wheel slip value (s_{L}) or the gradient of the wheel slip (s_{L}), is determined directly from the brake pressure profile (p).

3. Method according to Claim 1 or 2, **characterized in that** the time in the stored brake pressure profile (p), at which time the brake pressure (p) or the gradient of the brake pressure (p) is the cause for the impermissible wheel slip value or the gradient of the wheel slip (s_{L}), is determined from another system variable than the brake pressure profile (p), for example from the switch on/off profile (EAₚ) of the brake pressure (p).

4. Method according to one of Claims 1 to 3, **characterized in that**, in the case of a change in the brake pressure profile (p), the brake pressure (p) and/or the gradient of the brake pressure (p) are/is increased or lowered as parameters/parameter.

5. Method according to one of Claims 1 to 4, **characterized in that**, in the case of a change in the brake pressure profile (p), at least one parameter which characterizes the brake pressure profile (p) is changed by a fixed amount.

6. Method according to one of Claims 1 to 5, **characterized in that** the predefined brake pressure profile (p) is assigned to a defined wheel rotational speed change/wheel slip combination.

7. Method according to Claim 6, **characterized in that** the predefined brake pressure profile (p) is dependent on further characteristic or system variables, for example on the wheel slip change or a wheel rotational speed jolt.

8. Method according to one of Claims 1 to 7, **characterized by** being carried out in real driving operation on the road.

9. Method according to one of Claims 1 to 7, **characterized by** being carried out on a roller dynamometer.

10. Control unit for actuating the adjustable components of a brake system in order to carry out the method according to one of Claims 1 to 9.

11. Brake system in a vehicle, with a control unit (11) according to Claim 10.

12. Vehicle with a brake system according to Claim 11.

13. Computer program product with a program code which is designed to carry out steps of the method according to one of Claims 1 to 9 when the computer program product runs in a control unit (11) according to Claim 10.

## Revendications

1. Procédé de paramétrage automatique d'un système de freinage dans un véhicule, dans lequel un tracé de pression de freinage (p) est prédéfini en tant qu'essai de fonctionnement pendant un régime d'essai de déplacement et le patinage de roue (s_{L}) qui s'établit de ce fait au niveau d'au moins une roue du véhicule est identifié, **caractérisé en ce que** dans le cas où une valeur de patinage de roue (s_{L}) ou le gradient du patinage de roue (s_{L}) se trouve en-dehors d'une plage de valeurs autorisée, l'instant est déterminé, dans le tracé de pression de freinage (p), auquel la pression de freinage (p) ou le gradient de la pression de freinage (p) est la cause de la valeur de patinage de roue (s_{L}) non autorisée ou du gradient du patinage de roue (s_{L}) non autorisé, et un tracé de pression de freinage (p) modifié est prédéfini en tant que nouvel essai de fonctionnement, les paramètres à l'instant identifié du tracé de pression de freinage (p) modifié étant mémorisés et utilisés pour le paramétrage du système de freinage dans le cas où la valeur de patinage de roue (s_{L}) ou le gradient du patinage de roue (s_{L}) du tracé de pression de freinage qui s'établit de ce fait se trouve à l'intérieur de la plage de valeurs autorisée.

2. Procédé selon la revendication 1, **caractérisé en ce que** l'instant dans le tracé de pression de freinage (p) mémorisé auquel la pression de freinage (p) ou le gradient de la pression de freinage (p) est la cause de la valeur de patinage de roue (s_{L}) non autorisée ou du gradient du patinage de roue (s_{L}) est déterminé directement à partir du tracé de pression de freinage (p).

3. Procédé selon la revendication 1 ou 2, **caractérisé en ce que** l'instant dans le tracé de pression de freinage (p) mémorisé auquel la pression de freinage (p) ou le gradient de la pression de freinage (p) est la cause de la valeur de patinage de roue non autorisée ou du gradient du patinage de roue (s_{L}) est déterminé à partir d'une grandeur de système autre que le tracé de pression de freinage (p), par exemple à partir du tracé de mise en marche/arrêt (EAₚ) de la pression de freinage (p).

4. Procédé selon l'une des revendications 1 à 3, **caractérisé en ce que** lors de la modification du tracé de pression de freinage (p), la pression de freinage (p) et/ou le gradient de la pression de freinage (p) est augmenté ou abaissé en tant que paramètre.

5. Procédé selon l'une des revendications 1 à 4, **caractérisé en ce que** lors de la modification du tracé de pression de freinage (p), au moins un paramètre qui identifie le tracé de pression de freinage (p) est modifié d'un montant fixé.

6. Procédé selon l'une des revendications 1 à 5, **caractérisé en ce qu'**une combinaison déterminée de variation de la vitesse de rotation de roue - patinage de roue est associée au tracé de pression de freinage (p) prédéfini.

7. Procédé selon la revendication 6, **caractérisé en ce que** le tracé de pression de freinage (p) prédéfini dépend d'autres grandeurs caractéristiques ou grandeurs de système, par exemple de la variation du patinage de roue ou d'une saccade de la vitesse de rotation de roue.

8. Procédé selon l'une des revendications 1 à 7, **caractérisé par** une mise en œuvre en régime de conduite réel sur une route.

9. Procédé selon l'une des revendications 1 à 7, **caractérisé par** une mise en œuvre sur un banc d'essai à rouleaux.

10. Contrôleur destiné à commander les composants réglables d'un système de freinage en vue de mettre en œuvre le procédé selon l'une des revendications 1 à 9.

11. Système de freinage dans un véhicule, comprenant un contrôleur (11) selon la revendication 10.

12. Véhicule équipé d'un système de freinage selon la revendication 11.

13. Produit de programme informatique comprenant un code de programme, lequel est conçu pour exécuter les étapes du procédé selon l'une des revendications 1 à 9 lorsque le produit de programme informatique est exécuté sur un contrôleur (11) selon la revendication 10.
